# EUROPEAN PATENT APPLICATION

(11) **EP 3 738 941 A1**
(43) Date of publication of application: **18.11.2020**
(21) Application number: 19174367.3
(22) Date of filing: 14.05.2019
(51) Int. Cl.: C04B 28/02, C04B 28/04, C04B 28/06, C04B 28/14, C04B 28/18, C04B 28/24, C04B 38/08, B28B 1/00, B33Y 10/00, B33Y 30/00, B33Y 80/00

(54) **METHOD OF MANUFACTURING A COMPOSITE ELEMENT, DEVICE FOR MANUFACTURING THE COMPOSITE ELEMENT, THE COMPOSITE ELEMENT ITSELF AND USE OF THE COMPOSITE ELEMENT**

(71) Applicant: ETH Zurich, 8092 Zurich (CH)
(72) Inventor: FLATT, Robert, 8706 FELDMEILEN (CH); SANZ PONT, Daniel, 8804 Au (CH)

(57) **Abstract**

The invention concerns a method of manufacturing a composite element (20, 21, 22, 23, 24) comprising at least two components (100, 200) wherein a first component (100) comprises a light substance and is provided by means of an additive manufacturing technique. In addition, the invention concerns a device (10) for manufacturing the composite element (20, 21, 22, 23, 24). The composite element (20, 21, 22, 23, 24) itself as well as the use thereof are also subject-matter of this invention.

The method of manufacturing a composite element (20, 21, 22, 23, 24), in particular an architectural constructional element, comprising at least two components (100, 200), is characterized in that a first component (100) of the composite element (20, 21, 22, 23, 24) comprises a light substance with a density between 50 kg/m³ and 300 kg/m³, in particular between 70 kg/m³ and 200 kg/m³, and is provided by means of an additive manufacturing technique, wherein the first component (100) is combined with at least one additional component (200) in order to provide the composite element (20, 21, 22, 23, 24).

## Description

The invention concerns a method of manufacturing a composite element comprising at least two components wherein a first component comprises a light substance and is provided by means of an additive manufacturing technique. In addition, the invention concerns a device for manufacturing the composite element. The composite element itself as well as the use thereof are also subject-matter of this invention.

The building sector is responsible for around 36% of CO₂ emissions and 40% of the energy use in Europe. Several countries have developed strategies to lower energy consumption. One focus is the promotion of energy efficiency in buildings. The main aim is to considerably reduce the energy consumption and CO₂ emissions in order to reach zero-energy buildings. Such a scenario requires the optimal use of energy resources and a further improvement of the properties of the thermally insulating layers. The insulation materials on the market typically achieve thermal insulation values of not less than 28 mW/(m K), especially when inorganic binders are employed, due to mechanical requirements like mechanical strength

A frequently encountered challenge in many applications is that non-standard shapes of the insulating elements are needed. In architecture, this includes complex curved walls that can, for example, be designed by computer algorithms to find the optimum solution for each surface, in regards to structure, shading elements, and other aspects. With the existing traditional construction technologies, such solutions are highly expensive, due to the costs of tailored molds and complex building processes. The problem is more intricate when multilayer elements are required, in order to include for example thermal or acoustic insulation or fire protection. Thus, digital technologies present an interesting potential of addressing these limitations in a cost-efficient way.

Besides architecture, thermal insulation is required in many other technical systems, such as pipe insulation of heating as well as cooling distribution systems. Another technology field in which functional layers are required, are elements, such as smart floors or advanced flooring systems, in which various utilities are embedded. Limited space for thermal insulation and complex shapes required are also a problem in automotive technology, for example in internal combustion engines placed next to heat-sensitive components like sensors or batteries. Similar requirements and limitations can be found in household equipment like for example electronic coffee machines and ovens. Other fields of application that deal with space limitations for thermal insulation and possibly also shape complexity may include aircrafts, aerospace or other conveyances and refrigeration.

All these applications can benefit from ultra-high performance thermal insulating materials. In this regard aerogel-based composites have a high potential since aerogels represent a class of ultralight material. They also have an extremely high porosity which makes them particularly light weight.

The use of aerogels in architecture and construction is known from several publications. For example, WO 2014/090790 shows a dry blend for producing a thermally insulating rendering with 60 - 90 vol.-% of hydrophobized granular silica aerogel and 0.5 - 30 vol.-% of a purely mineral binder. The WO 2013/043882 shows a wallboard that includes an aerogel dispersed in a gypsum dihydrate. WO 2011/083174 describes a plaster containing aerogel to apply to a building surface to produce a thermally insulating coating. WO 2010/126792 as well as US 6080475 show a composition including aerogel for low thermal conductivity, too.

EP 2 142 718 B1 shows a tensioned multilayer architectural membrane structure comprising an aerogel, wherein the aerogel component represents one layer between at least two other layers of the membrane.

The disadvantage of the solutions described in these documents for using aerogel in architecture is that they are not suitable for free-forms and complex shapes.

At present, there is a high motivation for developing advanced manufacturing techniques of which 3D printing is one option. 3D printing technologies follow a fundamentally different approach for manufacturing compared to traditional technologies which are based on object creation through either molding/casting or subtracting/machining material from a raw object. In this context, 3D printing is an additive technique, fabricating objects by creating layers of material on top of each other. The processes used have their conceptual origin in inkjet printing technology, extended to the third dimension and other materials. It is possible to change the design for each object, without increasing the manufacturing costs, offering tailor-made solutions for a broad range of industries at different scales, including construction.

Depending on the materials and the way they are deposited for layer creation, several 3D printing techniques are known:
- Extrusion based technique: Objects are built by the selective deposition of materials through a nozzle.
- Jetting based technique: Objects are built by the selective deposition of droplets of the built material.
- Binder jet based technique: Objects are built by the selective deposition of a glue or a binder to a powder by an inkjet print head.
- Sheet lamination based technique: Objects are built by binding together sheets of material (paper, plastic or metal) and cut by a laser cutter for each layer.
- Photopolymerization based technique: Layers are formed by solidifying a liquid photopolymer by a light source or laser that follows a path. Alternatively, an image per layer can be projected for faster production.
- Powder bed fusion based technique: The technique is similar to binder jet technique, but in this case a thermal energy (laser sintering) fuses the selected areas of the powder bed, melting the material to form each layer to achieve a specified shape.
- Direct energy deposition technique: The material is fused by melting during deposition.

Each of the mentioned 3D printing processes may use different raw materials either as dry powder, liquid or filaments. Raw materials typically used includes glass, modeling clay, metal alloys, ceramics, photopolymers, thermoplastics, cement and so forth, depending of the industry sector, for example construction, automobile, medical, aerospace, industrial design and others. The size of the printed object can vary from millimeters to several meters or larger.

The object can be typically post-processed to increase the quality finish or to achieve a fully functional and finished object.

3D printing technology becomes increasingly interesting in many fields of industry. Especially in the field of architecture there are some advantages of using 3D printing. The flexibility to adapt dimensions and shape on demand is of high value for the building sector. Individualized construction elements of complex shapes become more and more popular in the field of architecture for esthetical and more importantly, functional reasons. It is possible to have individualized elements at low cost compared to classic manufacturing technologies because 3D printing is an additive single piece manufacturing technology with no need of for example molding or casting forms. Furthermore, elements can directly be manufactured from a 3D virtual model or a 3D scan of a real object by a specialized software creating sliced patterns (cross-sections) and instructions that are transferred to the 3D printer. Another cost-reducing aspect is the small amount of raw material compared to other technologies. The materials can be processed during 3D printing, by special print heads, placing the material where it is needed, with minimal waste. Additionally, the proportion of the raw materials can be selected on demand, in order to change the composition while printing, thus giving the possibility to print elements with gradients such as mechanical strength, thermal conductivity, acoustic transmission, translucency, and so forth.

The problem to be solved by the present invention is to provide a method for manufacturing a composite element, a device for manufacturing the composite element as well as the composite element itself, which combines low costs and high flexibility with high performance insulation properties.

This problem is solved by a method for manufacturing a composite element according to claim 1, the said composite element itself according to claim 13 and the use thereof according to claim 15 as well as a device for manufacturing the said composite element according to claim 11. Advantageous embodiments of the method of manufacturing the said composite element are given in subclaims 2 to 10. An advantageous embodiment of the said device is given in subclaim 12. An advantageous embodiment of the composite element itself are given in subclaim 14.

A first aspect of the invention is a method of manufacturing a composite element, in particular an architectural constructional element, comprising at least two components, wherein a first component of the composite element comprises a light substance with a density between 50 kg/m³ and 300 kg/m³, in particular between 70 kg/m³ and 200 kg/m³. The composite element is provided by means of an additive manufacturing technique, wherein the first component is combined with at least one additional component in order to provide the composite element.

The composite element may be used as an architecture and construction element and may be provided as a single-layered or multilayered building element. Other use cases of the composite element with application in different fields, depending on the manufacturing scale or design size, are not excluded.

The aim of the method is to provide a composite element with ultra-high thermal insulation performance, in other words a superinsulation element, in particular an architectural constructional element with an ultra-low thermal conductivity with a thermal conductivity value lambda below 100 mW/(m K), or maybe less than 40 mW/(m K), or even less than 20 mW/(m K).

A composite element is a material that is made from several different substances comprising at least two components of one or more materials that are combined in layers or by a mixture. It is also possible that the components are combined in sections. The aim of creating a composite element is to optimize or combine the specific desired physical and chemical properties of the resulting element compared to the single components, even if the two or more single components do not necessarily react chemically.

The first component comprises a light substance. The density of the light substance is between 50 kg/m³ and 300 kg/m³, in particular between 70 kg/m³ and 200 kg/m³, or even between 140 kg/m³ and 170 kg/m³.

The overall mechanical integrity is provided by combining the first component comprising the light substance with an additional component that may for example be a binder, creating a mortar-like material. This component therefore contains a light substance as an essential substance.

In one embodiment of the method according to the invention the light substance comprises an aerogel or a xerogel or a combination of both.

The light substance comprises an aerogel and/or a xerogel. A mixture of aerogel and xerogel is also possible. In particular the volume fraction of aerogel and/or xerogel of the first component is at least 10 vol.-%, in particular at least 50 vol.-%, or even at least 90 vol.-%, whereby this volume fraction includes the porosity of the aerogel and/or xerogel. Aerogel and xerogel are synthetic, porous and ultralight materials. They are furthermore characterized by an extremely low density, that may be between 50 kg/m³ and 300 kg/m³, in particular between 70 kg/m³ and 200 kg/m³, or even between140 kg/m³ and 170 kg/m³. Another material property of aerogels and xerogels is their low thermal conductivity, making them very suitable for thermal insulation. The thermal conductivity of the first component may be less than 30 mW/(m K), in particular equal or less than 13 mW/(m K). Aerogels and xerogels find widespread applications such as in acoustic damping, acoustic control, as part of multilayer/multicomponent sound proofing systems, fire protection, and so others. One embodiment is related to the advantage of using aerogel and/or xerogel with regard to a composite element to obtain ultralow thermal conductivity, thus reducing the required thickness of the thermal insulation layer, and therefore allowing the production of highly insulating thin elements. This is particularly advantageous with regard to building elements for architecture and construction or in other fields of technology with limited space for insulation. The first component is in other words a highly performing thermal insulation material that is based on aerogel and/or xerogel.

Furthermore, the first component can comprise other substances than aerogel and/or xerogel, for example in form of particles, in order to support chemical reactions and phase changes, design features or technical element functions.

In another embodiment of the method according to the invention the additive manufacturing technique is 3D printing or extrusion.

The first component is provided by means of extrusion or a 3D printing technique, in particular computer controlled . The first component may be provided by means of an extrusion-based 3D printing technique. Another possible 3D printing technique is photopolymerization, in which both techniques can be used simultaneously or at different stages, to improve the finish and level of detail of the 3D printed element and so forth. The printing can be done as a single layer or in two or more layers, using only light substance-based component or by including one or more additional component, allowing to generate gradient elements.

The advantage of extrusion or 3D printing of the first component is that the composite element can be produced with a minimum amount of air entrained, enhancing the mechanical properties as well as thermal insulation, besides other properties. Also, the amount of water can be controlled and/or reduced in different steps during the preprocessing and/or the printing process, resulting on the one hand in faster drying, but on the other hand also allowing to introduce chemical admixtures before or during the manufacturing process. The presence of air either entrained or from evaporated water acts as a thermal bridge in this type of material, because the thermal conductivity of air is two times higher than thermal conductivity of the pure light substance, in particular aerogel and/or xerogel

The first component and at least one additional component are combined in order to provide the said composite element. The first and the additional component may be combined as a mixture or in layers, wherein the additional component may be presented as a prefabricated element. In both cases there is a mechanical and/or chemical connection between the components. It is also possible to combine the said first component with more than one additional component in order to improve further functional properties of the composite element like for example acoustic insulation or fire protection or design specific properties like color.

The said method of manufacturing can be executed as a stand-alone process or it can be integrated in a complex fabrication process including prefabrication steps like material preparation and production of semi-finished parts as well as rework processes like machine finishing. It can also be combined with simultaneous processes, such as sheet lamination and/or direct energy deposition to include or produce other features, such as reinforcement, functional barriers for vapor, puncture resistance, enhanced fire protection, and so forth.

Another advantage, especially in architecture, of using extrusion or a 3D printing technique when manufacturing a composite element is the possibility to produce tailor-made elements with highly complex shape on-site.

In another embodiment of the method according to the invention the first component is presented as granules of a light substance in combination with inorganic or organic binders and/or is presented as at least one precursor for producing the light substance by polymerization.

In other words the first component may comprises an aerogel and/or an xerogel wherein the aerogel and/or xerogel is either present as granules or particles in combination with an organic or inorganic binder or, as another possibility, the first component comprises a precursor for producing the aerogel and/or xerogel, such as sol-gels, and the aerogel and/or xerogel is produced by photopolymerization, in particular selective photopolymerization, complemented by solvent exchange or supercritical drying techniques.

The first component is characterized by a high aerogel and/or xerogel particle packing, in particular of at least 90 vol%.
The nature of the aerogel and/or xerogel particles combined with an additive manufacturing technique according to the invented method allows to reach high aerogel and/or xerogel particle packing densities. This enables the production of highly performant thermal insulation composites at low cost.

In a further embodiment of the method according to the invention, the light substance is based on silica, carbon, metal or a combination of the said materials. The light substance may be an aerogel and/or xerogel based on silica.

Aerogels based on silica can be chemically generated by the method according to Kistler. Carbon-based aerogels can be created by pyrolysis in an inert atmosphere. Depending on the raw material the chemical processes based on other chemical syntheses are also possible.

In another embodiment of the method the additional component comprises a mineral and/or organic binder, in particular cement, such as Ordinary Portland cement, Portland cement, composite cement, calcium aluminate cement, calcium sulfoaluminate cement, cement comprising belite, silicate or aluminosilicate-based, lime or gypsum, as well as combinations thereof.

The additional component may comprise a cement-based material, like Portland cement, blended cements, composite cements, calcium aluminate cement, calcium sulfoaluminate cements, alkali activated alumino silicates and their combinations, lime or gypsum, or a combination of them. In particular, in case of using cement, the additional component could comprise a higher amount of belite than Ordinary Portland cement. Additional substances to be combined with the light substance, in particular when hydrophobic aerogels are employed with the binder, can be included, such as surface-active substances. Other additional substances to improve workability, shear behavior, setting kinetics and dimensional stability, in particular with respect to drying, can also be included.

Besides the said materials the additional component can comprise other raw materials, such as non-porous, porous and/or lightweight aggregates, for example: sand; limestone; artificial stone; quartz; fly ash; micro silica; silica fume, fumed silica, foamed blast furnace slag; volcanic slag; rubber; polystyrene either presented raw of in expanded or extruded form; polyurethane foam; mineral wool based on, but not limited to, glass, ceramic, polycrystalline, kaowool, stone or rock; fibers based on, but not limited to, wood, wool, glass, carbon, polypropylene, steel, or organic; glass spheres either hollow and/or with vacuum; expanded clay; shale and slate; foamed glass; perlite; pumice; puzzolan; diatoms; vermiculite; norlite; porous ceramic particles; porous silica in all grades from macro to nano-porous; xerogels and so forth. Other preformed porous particles may be considered, including ceramics or cements foamed by using surface-based technology.

The minimum volume fraction of a binder within the additional component may be 0.1 vol.-%.

The function of the additional component is in particular to support the mechanical and/or chemical stability of the composite element. Additional elements combined with or within the composite element, if included, can also provide mechanical integrity to the overall composite.

In another embodiment of the method for manufacturing of the said composite element, the first component is added on at least one section of the solid surface of the additional component, in particular by means of at least one additive manufacturing technique.

The term "solid surface" includes also surfaces of semi-solid conditions.

In this embodiment the first and the one or more additional component are produced in separated production steps, respectively, and are combined, in particular in layers. In this case the at least one additional component forms a load-bearing element, in particular an architectural element like a panel, on which the first component, in other words the thermally insulating component, is added on, in particular extruded or printed on, in particular directly added on. The extrusion or printing process can be repeated several times all over the element or in selected areas. Due to material costs and minimized wall thicknesses it is possible to add a small amount of the first component, in particular with a layer thickness between 5 mm to 300 mm, or even between 50 mm to up to 150 mm, depending on the final thermal insulating performance and the regulation or norm to comply with.

The additional component can be produced off-site or on-site. Off-site means that the additional component can be provided to the printing process as a blank or semi-finished component. In other words, the additional component is prefabricated. On-site means that the additional component is fabricated on the same site where the manufacturing of the composite component is finished. In case of an architectural element this could for example be the construction site of a house. It can comprise one or more layers of different compositions of raw materials.

It is possible that the first component is printed only on specific sections of the additional component, in particular only where high thermal insulation is needed. In other words, the resulting composite element consists of sections that are covered with the first component and sections that are not covered. It is also possible that the layer thickness of the first component as well as its composition varies along the surface of the additional component.

Additionally, it is possible to cover the composite element by one or more protection layers in order to protect the first component and ensure its insulating function. It is also possible to add other functional layers.

In another embodiment of the method according to the invention the additional component is manufactured at least during particular time periods simultaneously to the adding of the first component by means of at least one additive manufacturing technique.

In other words, the one or more additional component is manufactured at the same time while adding the first component by means of an additive manufacturing technique.

This means that the first and the additional component are manufactured within one process, in particular by means of one manufacturing device with one or more manufacturing tools with several tool heads. While one tool head is forming the additional component, in particular the load-bearing part, an extrusion or 3D printing tool head is simultaneously adding the first component on the just finished section of the additional component.

In another embodiment, the tool head for fabricating the additional component is a 3D printer or an extruder, too. In this case the additional component is manufactured by an additive production technique. In another embodiment the additional component is provided to the process as a blank or semi-finished element and further subtractive production steps like cutting, drilling or others are executed directly before or simultaneously to the printing of the first component.

In another embodiment of the method according to the invention the first component and the additional component are printed together, in particular are mixed and the resulting mixture is printed or extruded.

In the case of printing the first and the second component together, which means printing the said components at the same place and without lag of time, there are three special embodiment options to realize the method according to the invention.

The first possible embodiment of the method includes the use of at least two nozzles, or in other words openings of a dispensing unit, one for the first component and at least one for additional components, that dispense the components at the same time. The nozzles are in particular placed directly next to each other so that the components mix at least partially immediately after leaving the openings of the nozzles.

The second possibility is mixing the components while they are exposed, in particular by the use of a screw extrusion technique, which means that the components are in particular homogeneously mixed immediately before dispensed through the printing nozzle.

A third possibility is mixing the components in a separated mixing vessel and providing the homogeneous mixture to the extrusion or 3D printing process.

The components in this embodiment can be fluid, semifluid or dry. The maximum length extension of particles within the first and/ or the additional component can reach up to 30% of the diameter of the nozzle.

In another embodiment of the method according to the invention the first component or the mixture of the first and the additional components is adjusted in quantity and/or volume fraction of the respective components, in particular according to the progress of the process of manufacturing.

It may be, but is not limited to, that the extrusion or 3D printing process of the first component or the mixture of the first and the additional component is based on a 3D virtual design model and is executed partially or fully with digital control. Besides shape, the virtual model also comprises information about the material composition at any local point or volume element of the composite component. The control unit of the device that executes the said process uses this information to vary the quantity and the volume fraction of the respective components.

Adjusting quantity means that the amount of the first component or the mixture of the first and the additional component and thus the layer thickness is regulated in a way that it can vary within the composite element. Adjusting volume fraction means that the composition of the components or the mixture is regulated and can vary within the composite element. Because 3D printing and/or extrusion are additive techniques to build up an element the local variation within the element demands a variation of the components in quantity and/or volume fraction according to the progress of manufacturing.

In another embodiment, the method of manufacturing the composite element is worked out by a device for single layer compositions or by combining different compositions to print or place additional layers simultaneously, through a parallel arrangement of two or more printing nozzles or in combination with other types or tool heads to execute different additive or subtractive processing techniques. The dimensions of the nozzle can vary from below 1 mm up to one of the element's dimensions, such as element thickness, for example 5 cm to 20 cm in case of a wall, or the element's width, for example 50 cm up to 10 m or more for panels or slabs. In this context, the nozzle can be rigid or flexible, with a desired cross-sectional shape, in order to allow the element to be produced either flat or with changing thickness and/or curvature on demand. The 3D printing and the other combined manufacturing techniques can be executed by means of robotic fabrication wherein the tools or tool heads are attached to one or more robotic arms. This can provide higher freedom to the manufacturing method for the material deposition at bigger scale, especially for the construction sector.

A second aspect of the invention is a device for manufacturing a composite element, in particular an architectural constructional element, according to the method of manufacturing a composite element, comprising at least one supporting unit mechanically connected to at least one dispensing unit to realize at least one additive manufacturing technique, wherein the supporting unit can be either static or movable, in order to move the dispensing unit on a trajectory of at least 0.4 m in length.

The said device is suitable to execute the method according to the invention in at least one of the described embodiments. In one embodiment the device is suitable to be used on-site, which means that it can be used on the building site, for example of a house. In particular, the device is suitable to execute 3D printing or extrusion also on existing elements like inner or outer house walls for post-insulation.

The said device comprises at least one dispensing unit. The dispensing unit is suitable to realize 3D printing, like extrusion or extrusion-based 3D printing. It is also possible that the device comprises more than one unit to dispense one or more component or to realize different additive manufacturing techniques. Additionally, it is possible that the device comprises functional processing units for preprocessing, in particular surface preparation, or postprocessing, in particular to add protection layers or to execute mechanical processing like drilling, milling and others.

The supporting unit that supports the dispensing unit can by either static or movable. In the second case the dispensing unit is mechanically connected to a supporting unit, in particular a robotic arm, that can move the dispensing unit in all directions of space. The trajectory, or in other words the range of motion of the moving unit, is in particular at least 0.4 m in all directions of space, may be at least 1 m or is even at least 5 m. It is possible that the moving unit is partially, or even fully, digitally controlled.

The dispensing unit can be integrated into the supporting units. For off-site production, for example in case of manufacturing prefabricated elements, the device can also be arranged as a static stacked-processes station, in which a conveying band can be integrated. As the extrusion is a continuous process, the device can be complemented with other steps such as surface post-processing, cutting, curing, drying, packing and so forth.

Extrusion and printing could be combined. For example, the bottom layer made of the additional component could be extruded and the insulating layer made of the first component could be printed on top or vice versa. A robotic arm for example, would go back and forth applying the insulation and adapt its position to the ongoing printing.

In one embodiment of the device according to the invention the device comprises a mold or surface into or onto which the additive manufacturing technique is to be used, wherein the mold or surface are either static or movable by a driving unit.

In one special embodiment the driving unit comprises a conveying belt. The belt may on the one hand comprise special molds or shapes so that the lower side of the composite element is defined in shape by the belt. On the other hand, prefabricated elements may be moved by a conveying belt while executing the manufacturing process. Typically, but not necessarily, in this special embodiment the supporting unit is static while the mold or surface is movable.

Another aspect of the invention a composite element, in particular an architectural constructional element, comprising at least two components, wherein a first component of the composite element comprises a light substance and is provided by means of an additive manufacturing technique, wherein the first component is combined with at least one additional component in order to provide the composite element.

In other words, the said composite element is manufactured by at least one embodiment of the method according to the invention.

In one embodiment of the composite element according to the invention, the layer thickness of the first component may be at least 5 mm, or may be between 5 mm and 300 mm, or even may be between 50 mm and 150 mm, depending on the desired final thermal insulating performance and the regulation or norm to comply with.

Minimum layer thickness of the first component means the minimum extension of the first component measured perpendicularly to the surface of the additional component to ensure thermal insulation and/or mechanical stability, in particular against abrasion due to weather influences, when the first and the additional component are arranged in layers.

The layer thickness of the additional component is at least 0.5 mm. If adding the first component on an additional component to form for example a construction element the layer thickness of the additional component may be typically between 0.5 mm to 300 mm, for example in case of manufacturing structural walls. A layer thickness between 5 mm up to 120 mm is may be advantageous in this case.

The thickness of the additional components ensures the mechanical stability of the whole composite element.

In another embodiment of the composite element the volume fraction of the first aerogel comprising component is between 4 vol.-% and 99.7 vol%, or between 8 vol.-% and 90 vol.-%.

The composite element may comprise at least in sections one or more additive material in order to feature specific properties, in particular color, light transmission, thermal conductivity, mechanical strength and/or acoustic transmission of the composite element. It also may comprise an adhesive surface to allow bonding or gluing the composite element to a substrate or surface.

The said additive materials can be part of the first component, the additional component or the mixture of both components. The said additive materials may be part of the bulk composition of the components or represent a surface treatment or modification.

Additive materials can also be added as additional layers. These layers can be polymers, glass, membranes, coatings, metals, ultra-high performance concrete/mortar, materials with high heat storage capacity, phase change materials, vapor barriers, additional fire protective layers, steel reinforcements, carbon or glass fiber meshes, wood plates, wood elements, wood fibers, clay or calcined clay, renders, hardened cement pastes, mortars, lime wash and so forth, depending on the sector and needs.

The composite element can be a fully finished solution, such as a sandwich or multilayer element like a panel or wall for the construction sector, a multi-section/multi-material element like a thermally insulating brick, thermally insulating roof or slab, or complex architectural element, or a selective layer to complement existing systems like for building renovations.

A further aspect of the invention is the use of the composite element according to the described embodiments for at least partially covering or providing a surface, in particular the outer wall of a building, or to realize a covering element for a section of an outer wall of a building.

An outer wall means an element of a cladding or cover. A covering element means for example a high thermally insulating panel, a high thermally insulating structural or non-structural wall, a high thermally insulating brick, a high thermally insulating multifunctional advanced flooring system such as a slab, a ceiling or a roof, and so forth.

The aim of the said use is to realize high thermal insulation for different fields: automotive, transport, construction and architecture, power or production plants, technical systems of facilities, such as pipe insulation of heating as well as cooling distribution system and so forth. Advantageous is the use in the field of architecture and construction and technical systems of facilities.

The invention is explained below using the embodiment examples shown in the enclosed drawings.

It is shown in
- Fig. 1:: a device for manufacturing a composite element by the method according to the invention and in
- Fig. 2:: two devices for manufacturing a composite element by the method according to the invention.

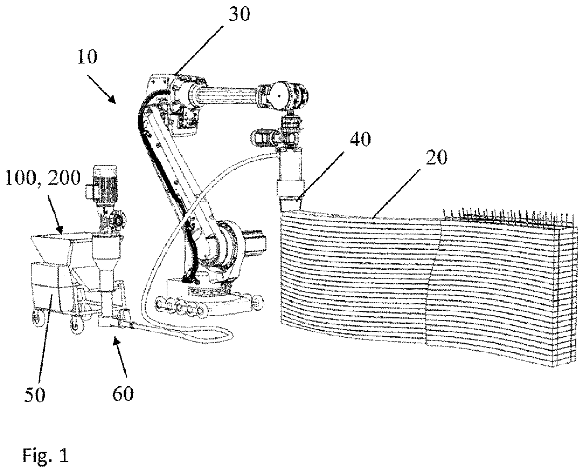

Figure 1 shows a device 10 for manufacturing a composite element 20, in particular an architectural element. The device 10 shown in this example comprises a movable supporting unit 30 that is moving a dispensing unit 40. The movable supporting unit 30 may be controlled by a computer control system. The device 10 is manufacturing the composite element 20 by adding several layers onto each other. The material that is dispensed by the dispensing unit comprises two components 100, 200. Both components 100, 200 are in this example mixed and stored in a storage container 50 comprising a transport unit 60 that is connected to the dispensing device 40. The first component 100 comprises a light substance with a density between 50 kg/m³ and 300 kg/m³ wherein the additional component 200 is a binder-like cement. The dispensing unit 40 may be the tool head of an extruder. The transport unit 60 may also comprise a mixing unit to mix up the components 100, 200 with a liquid like for example water, in particular if the components 100, 200 are presented as dry material.

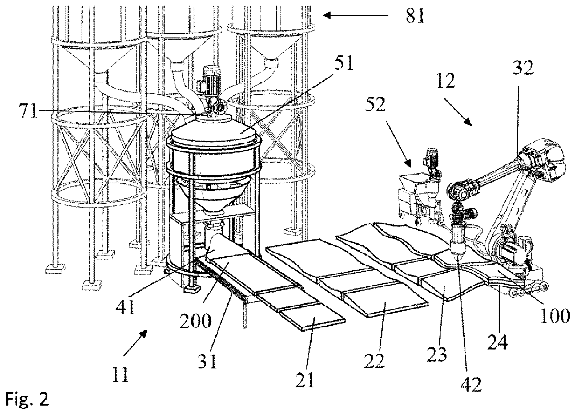

Figure 2 shows another embodiment of the method of manufacturing a composite element 20, in particular an architectural element by the use of two devices 11, 12 according to the invention, wherein the first device 11 is a static extruder and the second device 12 is a 3D-printer.

The first device 11 comprises a first container 51 with a mixing device 71. The first container 51 mixes several materials stored in the shown example in three raw material containers 81. The mixture which is the additional component 200 is added in a first step onto the movable surface 31 which is in this example realized by a conveying belt that may comprise molds to produce a first shape of the composite element 21.

The second step of the process is applying the first component 100 to the composite element 21 by a second device 12. The second device 12 is in this example similar to the device 10 shown in Figure 1. It comprises a movable second supporting unit 32 that is moving a second dispensing unit 42 that is connected to a second container 52. In other words, the example shown in Figure 2 shows a combination of a first manufacturing step with a static dispensing device 41 and a movable surface 31 producing a first layer from the additional component 200 and a second manufacturing step with a movable dispensing device 42 adding the first component 100 onto a static surface. In the example shown here the second dispensing unit 42 is flexible in a such way that the addition of the first component 100 on the back side of the composite element 21 is also possible. The whole process is advantageously digitally controlled.

Figure 2 shows four different final types of composite elements 21, 22, 23, 24 with different shapes that can be produced with the method according to the invention. The first type of the composite element 21 has a continuous cross section that can be produced only by extrusion on a conveying belt without molds. The second type of the composite element 22 shown here has a more complex shape essentially build by printing a layer on top of a shape according to the first type of composite elements 21 with varying thickness.

The third type of the composite element 23 additionally has a varying curvature achieved by using a flexible nozzle on the dispensing device 41. The forth type of the composite element 24 has a varying thickness and curvature and comprises printed layers on both surfaces. Therefore, a flexible nozzle, as for the element 23 may be used.

**List of reference signs**

| | |
|---|---|
| device | 10 |
| first device | 11 |
| second device | 12 |
| composite element | 20 |
| composite element first type | 21 |
| composite element second type | 22 |
| composite element third type | 23 |
| composite element final type | 24 |
| supporting unit | 30 |
| first supporting unit | 31 |
| second supporting unit | 32 |
| dispensing unit | 40 |
| first dispensing unit | 41 |
| second dispensing unit | 42 |
| container | 50 |
| first container | 51 |
| second container | 52 |
| transport unit | 60 |
| mixing unit | 71 |
| raw material container | 81 |
| first component | 100 |
| additional component | 200 |

## Claims

1. Method of manufacturing a composite element (20, 21, 22, 23, 24), in particular an architectural constructional element, comprising at least two components (100, 200), **characterized in that** a first component (100) of the composite element (20, 21, 22, 23, 24) comprises a light substance with a density between 50 kg/m³ and 300 kg/m³, in particular between 70 kg/m³ and 200 kg/m³, and is provided by means of an additive manufacturing technique, wherein the first component (100) is combined with at least one additional component (200) in order to provide the composite element (20, 21, 22, 23, 24).

2. Method of manufacturing a composite element (20, 21, 22, 23, 24) according to claim 1, **characterized in that** the light substance comprises an aerogel or a xerogel or combination of both.

3. Method of manufacturing a composite element (20, 21, 22, 23, 24) as claimed in at least one of the preceding claims, **characterized in that** the additive manufacturing technique is 3D printing or extrusion.

4. Method of manufacturing a composite element (20, 21, 22, 23, 24) as claimed in at least one of the preceding claims, **characterized in that** the first component (100) is presented as granules of a light substance in combination with inorganic or organic binders and/or is presented as at least one precursor for producing the light substance by polymerization.

5. Method of manufacturing a composite element (20, 21, 22, 23, 24) as claimed in at least one of the preceding claims, **characterized in that** the light substance is based on silica, carbon, metal or a combination of the said materials.

6. Method of manufacturing a composite element (20, 21, 22, 23, 24) as claimed in at least one of the preceding claims, **characterized in that** the additional component (200) comprises a mineral and/or organic binder, in particular cement, as Ordinary Portland cement, Portland cement, composite cement, calcium aluminate cement, calcium sulfoaluminate cement, cement comprising belite, silicate or aluminosilicate-based, lime or gypsum, as well as combinations thereof.

7. Method of manufacturing a composite element (20, 21, 22, 23, 24) as claimed in at least one of the preceding claims, **characterized in that** the first component (100) is added on at least one section of a solid surface of the additional component (200), in particular by means of at least one additive manufacturing technique.

8. Method of manufacturing a composite element (20, 21, 22, 23, 24) as claimed in claim 7, **characterized in that** the additional component (200) is manufactured at least during particular time periods simultaneously to the adding of the first component (100) by means of at least one additive manufacturing technique.

9. Method of manufacturing a composite element (20, 21, 22, 23, 24) as claimed in at least one of the preceding claims, **characterized in that** the first component (100) and the additional component (200) are printed together, in particular are mixed and the resulting mixture is printed or extruded.

10. Method of manufacturing a composite element (20, 21, 22, 23, 24) as claimed in at least one of the preceding claims, **characterized in that** the first component (100) or the mixture of the first and the additional component (100, 200) is adjusted in quantity and/or volume fraction of the respective components, in particular according to the progress of the manufacturing process.

11. Device (10) for manufacturing a composite element (20, 21, 22, 23, 24), in particular an architectural constructional element, according to the method of manufacturing a composite element (20, 21, 22, 23, 24) as claimed in one of the claims 1-10, comprising at least one supporting unit (30) mechanically connected to at least one dispensing unit (40, 41) to realize at least one additive manufacturing technique, wherein the supporting unit (30) can be either static or movable, in order to move the dispensing unit (40) on a trajectory of at least 0.4 m in length.

12. Device (10) for manufacturing a composite element (20, 21, 22, 23, 24) as claimed in claim 11, wherein the device (10) comprises a mold or surface into or onto which the additive manufacturing technique is to be used, and wherein the mold or surface are either static or movable by a driving unit.

13. Composite element (20, 21, 22, 23, 24), in particular an architectural constructional element, comprising at least two components (100, 200), wherein a first component (100) of the composite element (20, 21, 22, 23, 24) comprises a light substance and is provided by means of an additive manufacturing technique, wherein the first component (100) is combined with at least one additional component (200) in order to provide the composite element (20, 21, 22, 23, 24).

14. Composite element (20, 21, 22, 23, 24) as claimed in claim 13, **characterized in that** the layer thickness of the first component (100) is at least 5 mm.

15. Use of a composite element (20, 21, 22, 23, 24) according to at least one of the claims 13 to 14 for at least partially covering or providing a surface, in particular the outer wall of a building, or to realize a covering element for a section of an outer wall of a building.
